# EUROPÄISCHE PATENTSCHRIFT

(11) **EP 1 529 572 B1**
(45) Veröffentlichungstag und Bekanntmachung des Hinweises auf die Patenterteilung: **05.12.2007**
(21) Anmeldenummer: 05002641.8
(22) Anmeldetag: 06.11.2001
(51) Int. Cl.: B21D 11/10, B60S 1/38

(54) **Verfahren zum Herstellen gebogener Federschienen aus einem Endlosfederband**
Method for producing bent spring rails from an endless spring band
Procédé de production de lames flexibles pliées à partir d'une bande flexible continue

(30) Priorität: 11.11.2000 DE 10056054; 11.11.2000 DE 10056055
(43) Veröffentlichungstag der Anmeldung: 11.05.2005
(62) Teilanmeldung aus: 01989439.3
(73) Patentinhaber: Valeo Systèmes d'Essuyage, 78321 La Verrière (FR)
(72) Erfinder: Lenzen, Oliver, 74343 Sachsenheim (DE); Pachur, Gerald, 75354 Besigheim (DE); Blumenstock, Oliver, 74119 Untergruppenbach (DE)
(74) Vertreter: Jahn, Wolf-Diethart

(56) Entgegenhaltungen:
- DE-A- 19 816 609
- US-A- 3 192 551
- US-A- 6 063 216

## Beschreibung

Die Erfindung betrifft ein Verfahren zum Herstellen gebogener Federschienen aus einem Endlosfederband. Derartige Federschienen bilden das Trageelement von sog. Flachwischblättern für insbesondere Kraftfahrzeuge. Bei solchen Flachwischblättern gewährleistet das Trageelement in Form von ein oder auch mehreren, und insbesondere zwei, bandartig langgestreckten Federschienen, eine optimale Verteilung des von einem Wischarm ausgehenden Wischblatt-Anpressdrucks an einer zu wischenden Scheibe. Dazu ist das Trageelement im unbelasteten Zustand, wenn also das Wischblatt nicht an der Scheibe anliegt, mit einer definierten Krümmung entsprechend vorgebogen. Der Federschienenabschnitt bzw. die Federschiene kann dabei einen konstanten oder auch einen in Längsrichtung variierenden Querschnitt aufweisen. Das Trageelement eines derartigen Flachwischblatts ersetzt somit die aufwendige Tragbügelkonstruktion mit zwei an dem Wischgummi angeordneten, im unbelasteten Zustand nicht vorgebogenen Federschienen, wie sie beispielsweise aus der DE 15 05 397 A1 bekannt geworden ist.

Hierbei hat sich die Herstellung der definiert vorgebogenen Federschienen als problematisch herausgestellt. Insbesondere beim Abwickelvorgang des Endlosfederbandes von einer Rolle als auch beim Biegevorgang als solchen sowie bei vorgelagerten Prozessschritten entstehen im Federschienenmaterial Eigenspannungen, die die Eigenschaften des Federbandabschnitts im gebogenen Zustand bzw. der im späteren Einsatz zur Verwendung kommenden Federschiene negativ beeinflussen können. Durch Überlagerung dieser Eigenspannungen mit Last- und Betriebsspannungen im Wischblatteinsatz wird dabei der Bereich der plastischen Verformung recht schnell erreicht. Daraus resultieren eine bleibende Änderung der Bauteilgeometrie durch Setzvorgänge, die zum partiellen oder auch vollständigen Verlust der Bauteilfunktion führen können.

Aus der DE 198 16 609 ist ein Verfahren zum Herstellen gebogener Federschienen aus einem Endlosfederband bekannt geworden, bei dem ein Endlosfederband zunächst über mehrere Auflagestellen gebogen und anschließend an einer nachfolgenden Auflagestelle um einen geringeren Biegegrad in Gegenrichtung zu der ersten Biegung wieder zurückgebogen wird. Der so behandelte Federbandabschnitt wird nachfolgend vom Endlosfederband zum Erhalt der eigentlichen Federschiene abgetrennt. Aufgrund des kontinuierlichen Biegens und Rückbiegens des Endlosfederbandes werden Eigenspannungen im gebogenen Federbandmaterial abgebaut, wodurch bleibende Änderungen der Federschienen durch Setzvorgänge oder auch durch Last- bzw. Betriebsspannungen nicht oder vermindert auftreten und die Federschiene dauerhaft funktionssicher einsetzbar ist.

Das bekannte Verfahren weist allerdings den Nachteil auf, dass die optimale Einstellung der Verfahrensparameter, nämlich die Einstellung der Auflagestellen in Form von Walzen oder Rollen und insbesondere die Einstellung der Rückbiegerolle, sehr aufwendig ist. Bei Verstellung lediglich einer Biegerolle muss eine von dieser ersten Verstellung abhängige Verstellung der Rückbiegerolle vorgenommen werden, um im kontinuierlichen Biegevorgang eine erwünschte Rückbiegung des Federbandabschnitts zu erreichen.

Der vorliegenden Erfindung liegt deshalb die Aufgabe zugrunde, ein Verfahren zum Herstellen gebogener Federschienen aus einem Endlosfederband bereitzustellen, das den genannten Nachteilen des Standes der Technik abhilft und auf einfache Art und Weise durchführbar ist.

Diese Aufgabe wird bei einem Verfahren zum Herstellen gebogener Federschienen aus einem Endlosfederband gelöst, das sich durch folgende Verfahrensschritte kennzeichnet:
- Kontinuierliches Biegen eines Federbandabschnittes,
- Ablängen des gebogenen Federbandabschnitts zu einer Federschiene,
- diskontinuierliches Rückbiegen der Federschienen zum Abbau von Eigenspannungen der gebogenen und abgelängten Federschiene durch Beaufschlagen der Federschiene mit wenigstens einer Rückbiegekraft.

Im Gegensatz zum bekannten Stand der Technik, der eine Integration des Rückbiegevorgangs in den Gesamtfunktionsumfang einer Biegemaschine und einer daraus resultierenden direkten Kopplung von Biege- und Rückbiegevorgang des Endlosfederbandes beinhaltet, ist erfindungsgemäß eine funktionale und räumliche Trennung von Biege- und Rückbiegevorgang vorgesehen. Dadurch, dass nach dem kontinuierlichen, vom Endlosfederband kommenden Federbandabschnittes ein Ablängen des entsprechend vorgebogenen Federbandes erfolgt, kann in einem weiteren, davon unabhängigen Verfahrensschritt, die Rückbiegung der Federschiene diskontinuierlich, d.h. unabhängig von dem Biegevorgang des Endlosfederbandes, erfolgen. Besonderer Vorteil der Erfindung ist, dass verfahrenstechnisch der Biegevorgang, der kontinuierlich erfolgt, und der Rückbiegevorgang, der diskontinuierlich erfolgt, getrennt und damit unabhängig voneinander und rückwirkungsfrei optimierbar sind. Verfahrensmäßig können hierzu einfach handzuhabende, unabhängige und gut wartbare Steuerungsbausteine, z.B. Software, Kurven- oder Nockenscheiben, eingesetzt werden. Da eine direkte Taktbindung an den Biegeprozess nicht erforderlich ist, ist das Verfahren sehr flexibel einsetzbar. Durch einen derart einfachen Systemaufbau ergeben sich zudem in der Serienfertigung enorme Kostenvorteile.

Das erfindungsgemäße Verfahren zeichnet sich auch durch eine sehr hohe Flexibilität aus. Das Rückbiegen kann einerseits mittels einer einfachen Vorrichtung manuell und andererseits mittels einer maschinellen, pneumatisch oder hydraulisch arbeitenden, Vorrichtung realisiert werden.

Bei einer vorteilhaften Ausführungsform der Erfindung ist vorgesehen, dass die Federschiene vor dem Beaufschlagen mit der Rückbiegekraft mit einer Andrückkraft gegen eine Andrückfläche gedrückt wird.

Besonders vorteilhaft ist, wenn die Andrückkraft an der Stelle der größten Krümmung der Federschiene angreift.

Vorteilhafterweise wird hierdurch an der Stelle der größten Krümmung das höchste Biegemoment erreicht, wodurch dort vorhandene, hohe Eigenspannungen abgebaut werden.

Es hat sich gezeigt, dass auch die Eigenspannungen der abgelängten und gebogenen Federschienen vorteilhaft abgebaut werden, wenn die Andrückkraft an der Federschiene mittig angreift.

Je nach späterer Verwendung der Federschiene kann es von Vorteil sein, wenn die Andrückfläche eben oder auch gekrümmt ausgebildet ist.

Anstelle oder auch zusätzlich zu dem Andrücken der Federschiene gegen eine Andrückfläche ist es erfindungsgemäß denkbar, dass die Federschiene vor dem Beaufschlagen mit der Rückbiegekraft gehaltert wird. Durch eine derartige Halterung wird ausgeschlossen, dass die Federschiene bei der Kraftbeaufschlagung in unerwünschte Richtungen ausweichen kann, wodurch das Entstehen von zusätzlichen, unerwünschten Eigenspannungen verhindert wird.

Besonders vorteilhafte Ausführungen der Erfindung sehen vor, dass die Halterung der Federschiene an der Stelle der größten Krümmung und oder auch mittig an der Federschiene erfolgt.

Eine in der Praxis besonders bevorzugte Verfahrensausführung der Erfindung zeichnet sich dadurch aus, dass sich durch die Rückbiegekraft vorzugsweise ein weitgehend lineares Rückbiegemoment vom Angriffspunkt der Rückbiegekraft zum Angriffspunkt der Andrückkraft bzw. zum Ort der Halterung ergibt. Durch ein derartiges Rückbiegemoment wird erreicht, dass die stärkste Rückbiegung im Bereich der stärksten Verformung aufgebracht wird, wodurch die hohen Eigenspannungen im Bereich der stärksten Verformung abgebaut werden.

Eine weitere vorteilhafte Ausführungsform der Erfindung zeichnet sich dadurch aus, dass die Federschienen mit mehreren, vorzugsweise zwei, an verschiedenen Stellen angreifenden Rückbiegekräften beaufschlagt werden, wobei die Rückbiegekräfte vorzugsweise an den Bereichen der beiden freien Enden der Federschienen angreifen. Hierdurch kann vorteilhafterweise erreicht werden, dass ein weitgehend lineares, vorteilhaftes Biegemoment in die Federschienen eingeleitet wird. Insbesondere durch symmetrisches Einleiten von mehreren Rückbiegekräften ergibt sich eine symmetrische und damit vorteilhafte Rückbiegung der Federschienen.

Eine weitere Ausgestaltungsform der Erfindung zeichnet sich dadurch aus, dass die Beaufschlagung der Federschiene mit mehreren Rückbiegekräften zeitgleich oder nacheinander erfolgt.

Erfindungsgemäß ist denkbar, dass die Federschiene mit der wenigstens einen Rückbiegekraft mindestens einmal, vorzugsweise zwei- bis fünfmal nacheinander beaufschlagt wird. Dabei kann insbesondere die sich bei wiederholender Be- und Entlastung zu erwartende Verringerung der Spannung, die den Beginn einer bleibenden plastischen Verformung anzeigt (Bauschinger-Effekt), mitberücksichtigt werden.

Die Steuerung der wenigstens einen Rückbiegekraft kann vorteilhafterweise kraft- und/oder weggesteuert erfolgen. Bei einer kraftgesteuerten Beaufschlagung wird die Federschiene so lange beaufschlagt, bis eine gewisse Höhe einer Rückbiegekraft erreicht wird. Weggesteuertes Beaufschlagen kennzeichnet sich dadurch, dass nach Zurücklegen eines vorgegebenen Biegeweges der Rückbiegevorgang beendet wird.

Bei einer weiteren vorteilhaften Ausgestaltung der Erfindung werden mehrere parallel nebeneinander angeordnete, gebogene und abgelängte Federschienen zeitgleich rückgebogen. Vorteilhafterweise kann lediglich mit nur einer maschinellen Ausführung eine Vielzahl von Federschienen zeitgleich rückgebogen werden. Hierdurch wird die Gesamtanzahl bei ansonsten nacheinander durchzuführenden Rückbiegevorgängen erheblich reduziert.

Die Bestimmung der Werte der Rückbiegung, und insbesondere die Rückbiegekraft und/oder der Rückbiegeweg, können erfindungsgemäß empirisch ermittelt werden. Diese Werte sind im Wesentlichen abhängig von dem Trägheitsmoment, der Querschnittsfläche, der Höhe x der Biegung vor dem Rückbiegen und der gewünschten Höhe y der Biegung nach dem Rückbiegen. Zusätzlich zur empirischen Ermittlung der geeigneten Werte kann die Qualität der Rückbiegung auch aus werkstoff- und geometriespezifischen Kennfeldern ermittelt werden.

Weitere vorteilhafte Ausgestaltungen und Einzelheiten der Erfindung sind der folgenden Beschreibung zu entnehmen, in der die Erfindung anhand der in der Zeichnung dargestellten Ausführungsbeispiele näher beschrieben und erläutert ist.

Es zeigen:
- Figur 1: ein Ablaufdiagramm eines erfindungsgemäßen Verfahrens,
- Figur 2 bis Figur 5: einzelne Verfahrensschritte des Rückbiegevorganges einer ersten Ausführungsform der Erfindung; und
- Figur 6 bis Figur 9: einzelne Verfahrensschritte einer weiteren Ausführungsform der Erfindung des Rückbiegevorgangs.

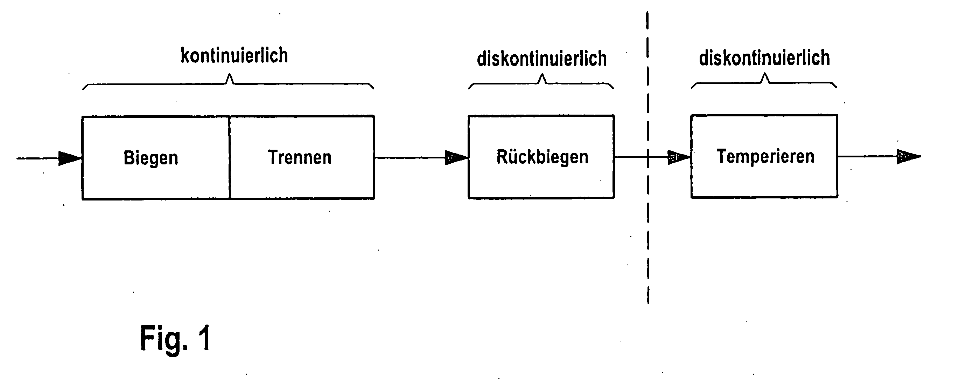

Dem Ablaufdiagramm gemäß Figur 1 ist zu entnehmen, dass zunächst der die Federschiene bildende Federbandabschnitt eines Endlosfederbandes gebogen und dann getrennt wird. Das Biegen sowie das Trennen erfolgt kontinuierlich. In einem nächsten, diskontinuierlichen Verfahrensschritt erfolgt das Rückbiegen der Federschiene zum Abbau von Eigenspannungen der gebogenenen und abgelängten Federschienen. Nach dem Rückbiegen können die Federschienen dem nicht dargestellten Montagevorgang zugeführt und zu einem Flachwischblatt bzw. einer entsprechenden Wischvorrichtung montiert werden.

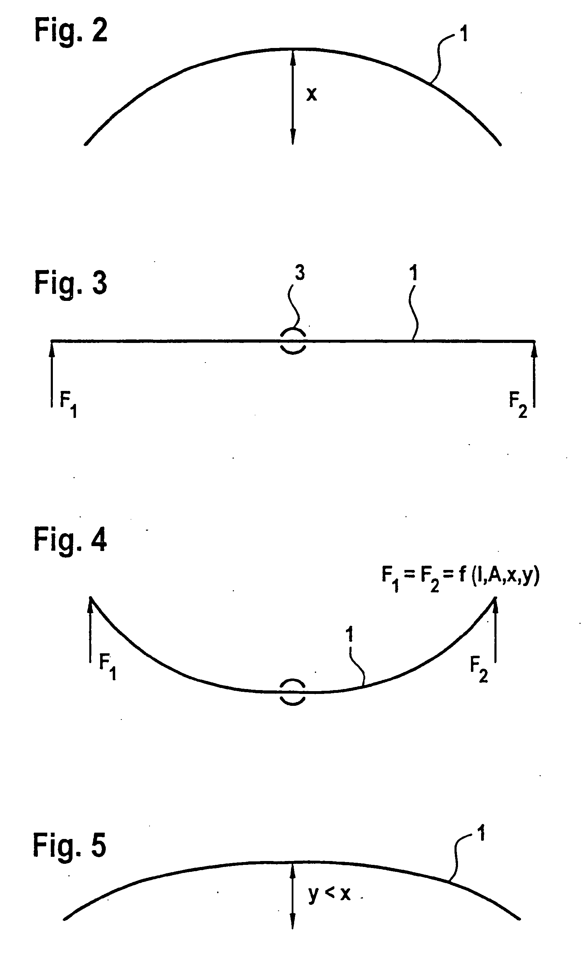

Die Figuren 2 bis 5 veranschaulichen den in Figur 1 dargestellten Verfahrensschritt des Rückbiegens.

In Figur 2 ist der abgelängte und gebogene Federbandabschnitt in Form einer Federschiene 1 in Seitenansicht dargestellt.

Nach dem Biegen weist die Federschiene 1 eine Biegung gegenüber der Horizontalen mit der Höhe x auf.

Zum Rückbiegen wird die Federschiene 1, wie in Figur 3 dargestellt, mittels einer Halterung 3 mittig gehaltert und mit zwei Rückbiegekräften F₁ und F₂, die die gleiche Größe aufweisen, derart rückgebogen, dass die Federschiene 1 eine weitgehend ebene Lage einnimmt. Bei Erhöhung der Rückbiegekräfte F₁ und F₂ wird diese in Figur 3 dargestellte ebene Lage der Federschiene 1 in eine in Figur 4 dargestellte überbogene Lage geführt. In Figur 4 ist die maximale Rückbiegung der Federschiene 1 gezeigt. Die erreichten Werte der Rückbiegekräfte F₁ und F₂ können hierbei entweder weg- oder kraftgesteuert sein. Die absolute Höhe der Rückbiegekräfte F₁ und F₂ setzt sich im Wesentlichen aus einer Funktion des Trägheitsmoments, der Querschnittsfläche, der Höhe der Biegung x vor dem Rückbiegevorgang und der Höhe der Biegung y nach dem Rückbiegevorgang zusammen.

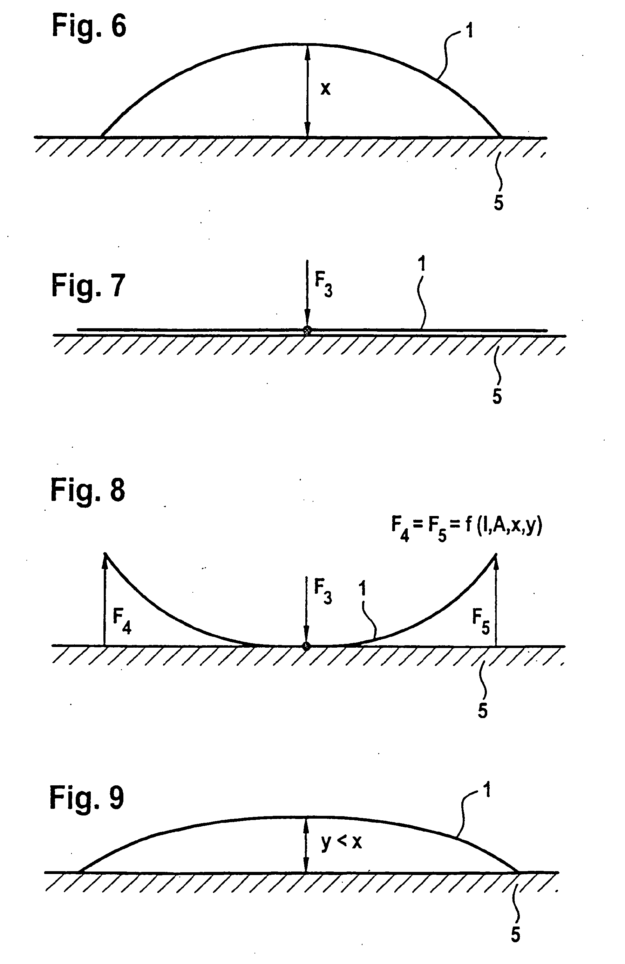

In Figur 5 ist die rückgebogene Federschiene im unbelasteten Zustand gezeigt. Hierbei ist deutlich zu erkennen, dass die Höhe y der Federschiene 1 nach dem Rückbiegevorgang kleiner ist als die Höhe x der Biegung der Federschiene 1 vor dem Rückbiegevorgang.

In den Figuren 6 - 9, in welchen ein anderes Rückbiegeverfahren dargestellt ist, wird die Federschiene 1 gegen eine ebene Andrückfläche 5 gedrückt. Die Andrückfläche 5 ist, wie aus den Figuren 6 - 9 deutlich hervorgeht, eben ausgeführt. Allerdings ist auch denkbar, dass anstelle einer ebenen Andrückfläche 5 eine gekrümmte Andrückfläche Verwendung finden kann.

In Figur 6 ist die Federschiene 1 entsprechend der Figur 2 nach dem Biege- und Ablängvorgang unbelastet mit ihren beiden freien Enden auf der Andrückfläche 5 aufliegend dargestellt. Die Höhe der Biegung der Federschiene 1 beträgt hierbei den Wert x.

Figur 7 zeigt den nächsten Verfahrensschritt, bei welchem eine Andrückkraft F₃ an der Stelle der größten Krümmung der Federschiene 1 bzw. mittig an der Federschiene 1 angreift und die Federschiene 1 vollständig gegen die Andrückfläche 5 drückt.

In einem nächsten Verfahrensschritt, der in Figur 8 dargestellt ist, werden an den freien Enden der Federschiene 1, entsprechend der Figur 4, Rückbiegekräfte F₄ und F₅ beaufschlagt, die die Federschiene 1 überbiegen. Die absolute Höhe der Rückbiegekräfte F₄ und F₅ ist entsprechend der Höhe der Rückbiegekräfte F₁ und F₂ insbesondere von dem Trägheitsmoment, der Querschnittsfläche, der Höhe der Biegung der Federschiene 1 vor dem Biegevorgang und der Höhe der Biegung der Federschiene 1 nach dem Rückbiegevorgang abhängig.

Wie aus Figur 9 hervorgeht, ist die Höhe y nach dem Rückbiegevorgang kleiner als die Höhe x der Biegung der Federschiene 1 vor dem Rückbiegevorgang.

Dadurch, dass bei den beiden in den Figuren dargestellten Ausführungsbeispielen der Erfindung die Rückbiegekräfte F₁ und F₂ bzw. F₄ und F₅ an den freien Enden der Federschiene 1 angreift, ergibt sich ein vorteilhaftes lineares Biegemoment von den Angriffspunkten der Rückbiegekräfte zu der Stelle, an welchem die Federschiene 1 gehaltert bzw. mit der Andrückkraft F₃ gegen die Andrückfläche 5 gedrückt wird. Der in den Figuren 2 - 5 bzw. 6 - 9 dargestellte Rückbiegevorgang ist insbesondere zwei- bis fünfmal zu wiederholen, um qualitativ hochwertige und dauerhaft funktionssichere Federschienen zu erhalten. Das Rückbiegen der einzelnen Enden der Federschiene 1 kann hierbei zeitgleich oder auch zeitversetzt erfolgen.

## Patentansprüche

1. Verfahren zum Herstellen gebogener Federschienen (1) aus einem Endlosfederband, **gekennzeichnet durch** folgende Verfahrensschritte:
- kontinuierliches Biegen eines Federbandabschnittes,
- Ablängen des gebogenen Federbandabschnittes zu einer Federschiene (1),
- diskontinuierliches Rückbiegen der Federschiene (1) zum Abbau von Eigenspannungen der gebogenen und abgelängten Federschiene (1) **durch** Beaufschlagen der Federschiene (1) mit wenigstens einer Rückbiegekraft (F₁, F₂ bzw. F₄, F₅).

2. Verfahren nach Anspruch 1, **dadurch gekennzeichnet, dass** die Federschiene (1) vor dem Beaufschlagen mit der Rückbiegekraft (F₁, F₂ bzw. F₄, F₅) mit einer Andrückkraft (F₃) gegen eine Andrückfläche (5) gedrückt wird.

3. Verfahren nach Anspruch 2, **dadurch gekennzeichnet, dass** die Andrückkraft (F₃) an der Stelle der größten Krümmung der Federschiene (1) angreift.

4. Verfahren nach Anspruch 2, **dadurch gekennzeichnet, dass** die Andrückkraft (F₃) an der Federschiene (1) mittig angreift.

5. Verfahren nach Anspruch 2, 3 oder 4, **dadurch gekennzeichnet, dass** die Andrückfläche (5) eben oder gekrümmt ausgebildet ist.

6. Verfahren nach einem der vorhergehenden Ansprüche, **dadurch gekennzeichnet, dass** die Federschiene (1) vor dem Beaufschlagen mit der Rückbiegekraft (F₄, F₅) gehaltert wird.

7. Verfahren nach Anspruch 6, **dadurch gekennzeichnet, dass** die Halterung (3) der Federschiene (1) an der Stelle der größten Krümmung der Federschiene (1) erfolgt.

8. Verfahren nach Anspruch 6 oder 7, **dadurch gekennzeichnet, dass** die Halterung (3) der Federschiene (1) mittig an der Federschiene (1) erfolgt.

9. Verfahren nach einem der vorhergehenden Ansprüche, **dadurch gekennzeichnet, dass** sich durch die Rückbiegekraft (F₁, F₂ bzw. F₄, F₅) vorzugsweise ein weitgehend lineares Rückbiegemoment vom Angriffspunkt der Rückbiegekraft (F₁, F₂ bzw. F₄, F₅) zum Angriffspunkt der Andrückkraft (F₃) bzw. zum Ort der Halterung (3) ergibt.

10. Verfahren nach einem der vorhergehenden Ansprüche, **dadurch gekennzeichnet, dass** die Federschiene (1) mit mehreren, vorzugsweise zwei an verschiedenen Stellen angreifenden, Rückbiegekräften (F₁, F₂ bzw. F₄, F₅) beaufschlagt werden, wobei die Rückbiegekräfte (F₁, F₂ bzw. F₄, F₅) vorzugsweise an den Bereichen der beiden freien Enden der Federschiene (1) angreifen.

11. Verfahren nach einem der vorhergehenden Ansprüche, **dadurch gekennzeichnet, dass** die Beaufschlagung der Federschiene (1) mit mehreren Rückbiegekräften (F₁, F₂ bzw. F₄, F₅) zeitgleich oder nacheinander erfolgt.

12. Verfahren nach einem der vorhergehenden Ansprüche, **dadurch gekennzeichnet, dass** die Federschiene (1) mit der wenigstens einen Rückbiegekraft (F₁, F₂ bzw. F₄, F₅) mindestens einmal, vorzugsweise zwei- bis fünfmal nacheinander, beaufschlagt wird.

13. Verfahren nach einem der vorhergehenden Ansprüche, **dadurch gekennzeichnet, dass** das Beaufschlagen der Federschiene (1) mit der wenigstens einen Rückbiegekraft (F₁, F₂ bzw. F₄, F₅) kraft- und/oder weggesteuert erfolgt.

14. Verfahren nach einem der vorhergehenden Ansprüche, **dadurch gekennzeichnet, dass** mehrere parallel nebeneinander angeordnete Federschienen (1) zeitgleich rückgebogen werden.

15. Verfahren nach einem der vorhergehenden Ansprüche, **dadurch gekennzeichnet, dass** die Werte der Rückbiegung, insbesondere die Rückbiegekraft (F₁, F₂ bzw. F₄, F₅) und/oder der Rückbiegeweg, empirisch ermittelt werden.

16. Verfahren nach einem der vorhergehenden Ansprüche, **dadurch gekennzeichnet, dass** die Federschienen (1) beschichtet sind und insbesondere eine Lack- und/oder Kunststoffschicht aufweisen.

## Claims

1. Method for making bent flexible vertebrae (1) from an endless flexible strip, **characterised by** the process steps below:
- Bending a flexible strip section continuously
- Cutting the bent flexible strip section to length to give a flexible vertebra (1),
- Reverse bending flexible vertebra (1) discontinuously to remove inherent stresses in the cut to length bent flexible vertebra (1) by subjecting the flexible vertebra (1) to one or more reverse bending forces (F₁, F₂/F₄, F₅).

2. Method according to claim 1, **characterised in that** flexible vertebra (1) is pressed against a counter surface (5) at a compression force (F₃) before being subjected to the reverse bending force (F₁, F₂/F₄, F₅).

3. Method according to claim 2, **characterised in that** the compression force (F₂) is applied at the point where the flexible vertebra (1) is most bent.

4. Method according to claim 2, **characterised in that** the compression force (F₃) is applied at the centre of the flexible vertebra (1).

5. Method according to claims 2, 3 or 4, **characterised in that** the counter surface (5) is flat or bent in shape.

6. Method according any of preceding claims, **characterised in that** the flexible vertebra (1) is mounted in a holder before the reverse bending forces (F₄, F₅) are applied.

7. Method as in claim 6, **characterised in that** the retainer (3) holds flexible vertebra (1) at the point where the flexible vertebra (1) is most bent.

8. Method according to claims 6 or 7, **characterised in that** retainer (3) holds the flexible vertebra (1) at the centre of flexible vertebra (1).

9. Method according any of preceding claims, **characterised in that** reverse bending forces (F₁, F₂ and F₄, F₅) preferably induce a largely linear reverse bend torque from the point where the reverse bending forces (F₁, F₂/F₄, F₅) apply to the point where the compression force (F₃) applies or to the point of holding (3).

10. Method according any of preceding claims, **characterised in that** flexible vertebra (1) is subjected to a number of, preferably two, reverse bending forces (F₁, F₂/F₄, F₅) applied at different points, whereby the reverse bending forces (F₁, F₂/F₄, F₅) are preferably applied in the region of the two free ends of the flexible vertebra (1).

11. Method according any of preceding claims, **characterised in that** flexible vertebra (1) is subjected to a number of reverse bending forces (F₁, F₂/F₄, F₅) simultaneously or in succession.

12. Method according any of preceding claims, **characterised in that** flexible vertebra (1) is subjected to one or more reverse bending forces (F₁, F₂ and F₄, F₅) at least once, preferably twice to five times.

13. Method according any of preceding claims, **characterised in that** flexible vertebra (1) is subjected to one or more reverse bending forces (F₁, F₂/F₄, F₅) controlled by force/travel.

14. Method according any of preceding claims, **characterised in that** a number of flexible vertebrae (1) arranged in parallel next to one another are bent back at the same time.

15. Method according any of preceding claims, **characterised in that** the reverse bend values, and especially the reverse bending forces (F₁, F₂/F₄, F₅)and/or the reverse bend travel are determined empirically.

16. Method according any of preceding claims, **characterised in that** the flexible vertebrae (1) are coated and in particular have a paint/plastic layer.

## Revendications

1. Procédé pour la fabrication de vertèbres flexibles (1) cintrées à partir d'une bande flexible sans fin, **caractérisé par** les étapes suivantes du procédé :
- cintrage en continu d'un tronçon de bande flexible,
- mise à longueur du tronçon de bande flexible cintré pour former une vertèbre flexible (1) et
- contre-cintrage discontinu des vertèbres flexibles (1) pour atténuer les contraintes internes de la vertèbre flexible (1) cintrée et mise à longueur en soumettant la vertèbre flexible (1) à au moins une force de contre-cintrage (F₁, F₂ et/ou F₄, F₅).

2. Procédé selon la revendication 1, **caractérisé en ce que** la vertèbre flexible (1) est comprimée contre une surface de pression (5) par une force de pression (F₃) avant d'être soumise à la force de contre-cintrage (F₁, F₂ et/ou F₄, F₅).

3. Procédé selon la revendication 2, **caractérisé en ce que** la force de pression (F₃) est appliquée au point de la plus grande courbure de la vertèbre flexible (1).

4. Procédé selon la revendication 2, **caractérisé en ce que** la force de pression (F₃) est appliquée au milieu de la vertèbre flexible (1).

5. Procédé selon la revendication 2, 3, ou 4, **caractérisé en ce que** la surface de pression (5) est conçue pour être plane ou courbe.

6. Procédé selon une des revendications précédentes, **caractérisé en ce que** la vertèbre flexible (1) est fixée avant d'être soumise à la force de contre-cintrage (F₄, F₅).

7. Procédé selon la revendication 6, **caractérisé en ce que** la fixation (3) de la vertèbre flexible (1) est effectuée au point de la plus grande courbure de la vertèbre flexible (1).

8. Procédé selon la revendication 6 ou 7, **caractérisé en ce que** la fixation (3) de la vertèbre flexible (1) est effectuée au milieu de la vertèbre flexible (1).

9. Procédé selon une des revendications précédentes, **caractérisé en ce qu'**il se produit sous l'effet de la force de contre-cintrage (F₁, F₂ et/ou F₄, F₅) un couple de contre-cintrage de préférence largement linéaire du point d'application de la force de contre-cintrage (F₁, F₂ et/ou F₄, F₅) jusqu'au point d'application de la force de pression (F₃) et/ou à l'emplacement de la fixation (3).

10. Procédé selon une des revendications précédentes, **caractérisé en ce que** la vertèbre flexible (1) est soumise à plusieurs, de préférence deux, forces de contre-cintrage (F₁, F₂ et/ou F₄, F₅) appliquées en des points différents, les forces de contre-cintrage (F₁, F₂ et/ou F₄, F₅) étant de préférence appliquées dans la zone des deux extrémités libres de la vertèbre flexible (1).

11. Procédé selon une des revendications précédentes, **caractérisé en ce que** la vertèbre flexible (1) est soumise à plusieurs forces de contre-cintrage (F₁, P₂ et/ou F₄, F₅) simultanément ou successivement.

12. Procédé selon une des revendications précédentes, **caractérisé en ce que** la vertèbre flexible (1) est soumise à la au moins une force de contre-cintrage (F₁, F₂ et/ou F₄, F₅) au moins une fois, de préférence deux à cinq fois successivement.

13. Procédé selon une des revendications précédentes, **caractérisé en ce que** l'application de la au moins une force de contre-cintrage (F₁, F₂ et/ou F₄, F₅) à la vertèbre flexible (1) est effectuée par commande proportionnelle à la force et/ou à la course.

14. Procédé selon une des revendications précédentes, **caractérisé en ce que** plusieurs vertèbres flexibles (1) disposées parallèlement les unes à côté des autres sont contre-cintrées simultanément.

15. Procédé selon une des revendications précédentes, **caractérisé en ce que** les valeurs de contre-cintrage, en particulier la force de contre-cintrage (F₁, F₂ et/ou F₄, F₅) et/ou la course de contre-cintrage, sont déterminées empiriquement.

16. Procédé selon une des revendications précédentes, **caractérisé en ce que** les vertèbres flexibles (1) sont revêtues, et présentent en particulier une couche de vernis et/ou de matière plastique.
